# EUROPÄISCHE PATENTANMELDUNG

(11) **EP 4 759 105 A1**
(43) Veröffentlichungstag der Anmeldung: **17.06.2026**
(21) Anmeldenummer: 24219746.5
(22) Anmeldetag: 13.12.2024
(51) Int. Cl.: A01B 63/00, A01B 63/111, A01B 63/112

(54) **VERFAHREN UND NUTZFAHRZEUG ZUR EINSTELLUNG EINER HÖHENPOSITION EINES KRAFTHEBERS**

(71) Anmelder: Deere & Company, Moline, IL 61265 (US)
(72) Erfinder: PETERS, Benedikt, 68163 Mannheim (DE)
(74) Vertreter: Dehnhardt, Florian Christopher

(57) **Zusammenfassung**

Die Erfindung betrifft ein Verfahren zur Einstellung einer Höhenposition (pos) eines an einem Nutzfahrzeug (10) gelagerten und mit einem Anbaugerät (16) zur Bodenbearbeitung gekoppelten Krafthebers (14). Eine bereitgestellte Basis-Kennlinie (KL-B) repräsentiert einen Zusammenhang zwischen einer Soll-Höhenposition (pos_sol) des Krafthebers (14) und einer am Kraftheber (14) erwarteten Zugkraft (F_erw) repräsentiert. Für eine ausgewählte Soll-Höhenposition (pos_sol) wird die mittels der Basis-Kennlinie (KL-B) erwartete Zugkraft (F_erw) als eine Soll-Zugkraft (F_sol) festgelegt. In Abhängigkeit von der Soll-Zugkraft (F_sol) und einer am Kraftheber (14) erfassten Ist-Zugkraft (F_sen) wird eine resultierende Höhenposition (pos_res) des Krafthebers (14) ermittelt und eingestellt. Weiterhin betrifft die Erfindung ein Nutzfahrzeug (10) mit einer Steuereinheit (24) zur Durchführung eines solchen Verfahrens.

## Beschreibung

Die Erfindung betrifft ein Verfahren und ein Nutzfahrzeug zur Einstellung einer Höhenposition eines Krafthebers, welcher an dem Nutzfahrzeug gelagert ist und mit einem Anbaugerät zur Bodenbearbeitung gekoppelt ist.

In der Landwirtschaft werden verschiedene Anbaugeräte zur Bodenbearbeitung eingesetzt. In vielen Fällen ist das Anbaugerät mit einem Kraftheber gekoppelt, welcher an dem Nutzfahrzeug höhenverstellbar gelagert ist. Der Kraftheber ermöglicht eine variable Arbeitstiefe des Anbaugerätes durch entsprechendes Anheben oder Absenken des Krafthebers. Mit der Einstellung einer Höhenposition des Krafthebers kann das Arbeitsergebnis bei der Bodenbearbeitung beeinflusst werden.

Aufgabe der vorliegenden Erfindung ist es, eine Ansteuerung des Krafthebers zur Einstellung seiner Höhenpositionen während einer Bodenbearbeitung zu verbessern.

Diese Aufgabe wird durch ein Verfahren mit den Merkmalen des unabhängigen Patentanspruchs 1 und durch ein Nutzfahrzeug mit den Merkmalen des unabhängigen Patentanspruchs 9 gelöst.

Weitere vorteilhafte Ausgestaltungen der Erfindung gehen aus den Unteransprüchen hervor.

Gemäß Anspruch 1 wird ein Verfahren zur Einstellung einer Höhenposition eines Krafthebers vorgeschlagen, welcher an einem Nutzfahrzeug gelagert und mit einem Anbaugerät zur Bodenbearbeitung (z.B. Pflug, Egge) gekoppelt ist. Dabei wird eine Basis-Kennlinie bereitgestellt, welche einen Zusammenhang zwischen einer Soll-Höhenposition des Krafthebers und einer für die jeweilige Soll-Höhenposition am Kraftheber erwartete Zugkraft repräsentiert. Für eine (z.B. durch einen Benutzer) ausgewählte Soll-Höhenposition wird mittels der Basis-Kennlinie die erwartete Zugkraft als eine Soll-Zugkraft festgelegt. In Abhängigkeit von dieser Soll-Zugkraft und einer (insbesondere durch einen Sensor) am Kraftheber erfassten Ist-Zugkraft wird eine resultierende Höhenposition ermittelt und am Kraftheber eingestellt.

Somit kann eine technische Regelung für die Höheneinstellung des Krafthebers derart definiert werden, dass eine festgelegte Soll-Zugkraft möglichst präzise und konstant aufrechterhalten wird. Dies entspricht bei idealen und/oder konstanten Bodenverhältnissen einer konstanten Höhenposition des Krafthebers und somit einer gewünschten konstanten Arbeitstiefe des Anbaugerätes. Während der Bodenbearbeitung kann eine festgelegte Soll-Zugkraft möglichst aufrechtzuerhalten werden, d.h. Abweichungen von der Soll-Zugkraft können möglichst minimiert werden, indem die Höhenposition des Krafthebers verändert wird. Hierdurch kann auch bei topographischen Unregelmäßigkeiten eine möglichst konstante Arbeitstiefe des Anbaugerätes aufrechterhalten werden. Dies wiederum unterstützt bei Unregelmäßigkeiten innerhalb des Feldes ein gleichmäßiges Wachstum des in den Boden eingesetzten Saatgutes.

Die Festlegung der Soll-Zugkraft mittels der Basis-Kennlinie bietet eine effiziente Voraussetzung für eine technisch präzise Wiederherstellung eines Ausgangszustands des Krafthebers, wenn dessen Soll-Zugkraft und/oder resultierende Höhenposition im Laufe der Bodenbearbeitung verändert und der Kraftheber danach wieder in den Ausgangszustand überführt werden soll. Mit anderen Worten kann hierdurch ein reproduzierbares Regelungsverhalten des Krafthebers während der Bodenbearbeitung unterstützt werden.

Vorzugsweise wird ein Aktuator (z.B. ein elektrisch oder hydraulisch angetriebener Hubzylinder) des Krafthebers in Abhängigkeit von der jeweils ermittelten resultierenden Höhenposition angesteuert, um diese Höhenposition des Krafthebers einzustellen. Insbesondere wird der Aktuator durch eine geeignete Steuereinheit angesteuert, welche unter Berücksichtigung von Eingangsdaten (z.B. Soll-Höhenposition, Ist-Zugkraft) und der Basis-Kennlinie die resultierende Höhenposition ermitteln kann.

Weiter vorzugsweise wird die Ermittlung der resultierenden Höhenposition durch eine bereitgestellte Regelungs-Kennlinie unterstützt, welche eine Abhängigkeit zwischen der resultierenden Höhenposition des Krafthebers und einer Abweichung der Soll-Zugkraft von der Ist-Zugkraft repräsentiert. Ggf. kann die vorgenannte Abhängigkeit auch weitere Kriterien umfassen. Die resultierende Höhenposition kann in Abhängigkeit von der Regelungs-Kennlinie automatisch ermittelt und eingestellt bzw. geregelt werden, ohne dass es hierzu irgendwelcher Steuerbefehle eines Benutzers oder Fahrers des Nutzfahrzeugs bedarf.

Vorteilhaft wird die Regelungs-Kennlinie derart angewendet, dass sie die Basis-Kennlinie in einem Kennlinienpunkt schneidet, welcher auf der Basis-Kennlinie der ausgewählten Soll-Höhenposition und der festgelegten Soll-Zugkraft entspricht. Eine derartige Kombination der Regelungs-Kennlinie mit der Basis-Kennlinie unterstützt die Ermittlung und Einstellung optimierter resultierender Höhenpositionen des Krafthebers.

Die Regelungs-Kennlinie ist vorteilhaft derart ausgelegt, dass die resultierende Höhenposition niedriger eingestellt wird als die ausgewählte Soll-Höhenposition des Krafthebers, wenn die Ist-Zugkraft kleiner ist als die Soll-Zugkraft. Außerdem wird die resultierende Höhenposition höher eingestellt als die ausgewählte Soll-Höhenposition des Krafthebers, wenn die Ist-Zugkraft größer ist als die Soll-Zugkraft. Dieses Regelungsverhalten kann u.a. dazu genutzt werden, eine Aufrechterhaltung der festgelegten Soll-Zugkraft und/oder einer möglichst konstanten Arbeitstiefe des Anbaugerätes zu unterstützen.

In einer bevorzugten Ausführungsform ist eine mathematische Steigung der Regelungs-Kennlinie veränderbar. Mit dieser Veränderbarkeit kann beispielsweise ausgewählt werden, dass kleine Abweichungen zwischen der Soll-Zugkraft und der am Kraftheber erfassten Ist-Zugkraft größere Änderungen der Höhenposition des Krafthebers generieren sollen oder dass große Abweichungen zwischen der Soll-Zugkraft und der am Kraftheber erfassten Ist-Zugkraft kleinere Änderungen der Höhenposition des Krafthebers generieren sollen. Somit kann eine Regelung der Höhenposition des Krafthebers individuell (z.B. an unterschiedliche Bodentypen oder unterschiedliche Bodenverhältnisse desselben Feldes) angepasst werden. Folglich kann wahlweise eine möglichst präzise Einstellung entweder einer gewünschten Höhenposition des Krafthebers oder einer gewünschten Zugkraft priorisiert werden. Die Steigung wird vorzugsweise durch ein vom Benutzer oder Fahrer zu betätigendes Betätigungselement (z.B. Regler) eingestellt.

Weiter vorzugsweise ist ausgehend von der ursprünglich ausgewählten Soll-Höhenposition des Krafthebers mittels eines Bedienelements eine andere Höhenposition auswählbar, welche dann der aktuell ausgewählten Soll-Höhenposition entspricht. Mit anderen Worten ist die ausgewählte Soll-Höhenposition veränderbar. Für diese andere ausgewählte Soll-Höhenposition wird dann wieder mittels der Basis-Kennlinie die zugeordnete erwartete Zugkraft als eine veränderte Soll-Zugkraft festgelegt. Somit kann der Benutzer bzw. Fahrer selbst die Höhenposition des Krafthebers bzw. die Arbeitstiefe des Anbaugerätes verändern und das Arbeitsergebnis der Bodenbearbeitung beeinflussen, wenn das momentane Arbeitsergebnis nicht optimal erscheint.

Vorteilhaft wird auch ausgehend von der veränderten Soll-Zugkraft eine veränderte resultierende Höhenposition des Krafthebers ermittelt und eingestellt. Dies erfolgt wieder in Abhängigkeit von der veränderten Soll-Zugkraft und der am Kraftheber erfassten Ist-Zugkraft und/oder in Abhängigkeit von der bereitgestellten Regelungs-Kennlinie. Die veränderte resultierende Höhenposition kann folglich analog zu der ursprünglichen resultierenden Höhenposition ermittelt werden. Die bereitgestellte Regelungs-Kennlinie kann also entsprechend der verändert ausgewählten Soll-Höhenposition entlang der Basis-Kennlinie verschoben angewendet werden, um eine veränderte resultierende Höhenposition zu ermitteln.

In einer weiteren bevorzugten Ausführungsform kann die Auswahl der Soll-Höhenposition schrittweise verändert werden, indem das erwähnte Bedienelement einen Vorwärtsschritt erzielt. Der Vorwärtsschritt kann beispielsweise durch eine mechanische Bewegung (z.B. rotatorisch oder linear) des Bedienelements oder durch eine Druckbeaufschlagung (z.B. Drücken eines Druckknopfes) des Bedienelements realisiert werden. Somit kann die auszuwählende oder ausgewählte Soll-Höhenposition bedarfsweise in definierten Schritten verändert werden.

Weiter vorzugsweise kann ausgehend von einer durch mindestens einen Vorwärtsschritt eingestellten veränderten resultierenden Höhenposition wieder die resultierende Höhenposition vor der Veränderung eingestellt werden. Hierzu wird eine Anzahl von Rückwärtsschritten des Bedienelements durchgeführt, welche der Anzahl der zuvor durchgeführten Vorwärtsschritte entspricht. Hierbei ermöglicht die kombinierte Verwendung der Basis-Kennlinie und der Regelungs-Kennlinie, dass nach der Rückgängigmachung einer veränderten resultierenden Höhenposition der Kraftheber wieder auf die ursprüngliche resultierende Höhenposition zurückgeführt werden kann. Der Kraftheber kann folglich - insbesondere bei ungleichen Bodenbedingungen - definiert auf das ursprüngliche Regelungsverhalten zurückgeführt werden, wodurch der Benutzer bzw. Fahrer bei der Einstellung einer gewünschten Arbeitstiefe des Anbaugerätes einen höheren Bedienungskomfort während der Bodenbearbeitung erhält.

Die Erfindung betrifft weiter ein Nutzfahrzeug mit einem daran gelagerten Kraftheber, welcher mit einem Anbaugerät zur Bodenbearbeitung gekoppelt ist. Außerdem weist das Nutzfahrzeug einen Kraftsensor zur Erfassung einer Ist-Zugkraft am Kraftheber und eine Steuereinheit zur Einstellung einer Höhenposition des Krafthebers auf. Für die Einstellung der Höhenposition ist eine Basis-Kennlinie (insbesondere in der Steuereinheit) bereitgestellt, welche einen Zusammenhang zwischen einer Soll-Höhenposition des Krafthebers und einer am Kraftheber erwarteten Zugkraft repräsentiert. Für eine (z.B. durch den Anwender bzw. Fahrer) ausgewählte Soll-Höhenposition ist die mittels der Basis-Kennlinie erwartete Zugkraft als eine Soll-Zugkraft festlegbar. In Abhängigkeit von der Soll-Zugkraft und der Ist-Zugkraft ist eine resultierende Höhenposition des Krafthebers ermittelbar und einstellbar.

Das erfindungsgemäße Nutzfahrzeug weist die oben beschriebenen Vorteile des erfindungsgemäßen Verfahrens auf. Dabei können mit einer Anpassung der Höhenposition beispielsweise Abweichungen von der festgelegten Soll-Zugkraft und/oder von einem gewünschten Arbeitsergebnis während der Bodenbearbeitung vermieden oder minimiert werden. Insbesondere kann eine festgelegte Soll-Zugkraft automatisiert aufrechterhalten werden, was insbesondere bei topographischen Unregelmäßigkeiten eine möglichst konstante Arbeitstiefe des Anbaugerätes unterstützen kann. Außerdem bietet die bereitgestellte Basis-Kennlinie eine technisch einfache Voraussetzung, bei Veränderungen der festgelegten Soll-Zugkraft und/oder der resultierenden Höhenposition den Kraftheber bzw. dessen Höhenposition wieder präzise in den Ausgangszustand zu überführen, wie dies während der Bodenbearbeitung oftmals gewünscht ist. Hierdurch ist mit einfachen technischen Mitteln ein reproduzierbares Regelungsverhalten des Krafthebers während der Bodenbearbeitung gewährleistet.

Vorteilhaft ist die ausgewählte Soll-Höhenposition veränderbar, so dass der Anwender bzw. Fahrer zur Optimierung des gewünschten Arbeitsergebnisses während der Bodenbearbeitung mit unterschiedlichen ausgewählten Soll-Höhenpositionen operieren kann. Vorzugsweise ist für die Veränderung der Soll-Höhenposition ein durch den Anwender bzw. Fahrer betätigbares Bedienelement vorgesehen, wodurch die ausgewählte Soll-Höhenposition beispielsweise abhängig von einem optischen Arbeitsergebnis bei der Bodenbearbeitung steuerungstechnisch einfach angepasst werden kann.

Das Bedienelement ist beispielsweise als ein bewegliches Element mit einer Bewegungsstrecke (z.B. linear oder rotatorisch) ausgebildet. Die mögliche Bewegungsstrecke kann mehrere gleichmäßige Bewegungsschritte beinhalten, so dass eine gleichmäßige Veränderung der ausgewählten Soll-Höhenposition möglich ist. Die Bewegungsschritte können Vorwärtsschritte und/oder Rückwärtsschritte sein abhängig davon, in welche Richtung (höher oder niedriger) die ausgewählte Soll-Höhenposition verändert werden soll. Insbesondere entspricht eine definierte Bewegungsstrecke des Bedienelements einer vorbestimmten Soll-Veränderung der ausgewählten Soll-Höhenposition.

Vorzugsweise ist das Bedienelement als ein drehbewegliches bzw. rotatorisches Steuerrad ausgebildet. Dessen Drehbewegungen können eine unterschiedlich lange Bewegungsstrecke haben und dabei dem Maß der gewünschten Positionsveränderung der Soll-Höhenposition entsprechen. Insbesondere entspricht der bereits erwähnte Vorwärts- oder Rückwärtsschritt des Bedienelements einer definierten Soll-Veränderung der Soll-Höhenposition entlang der bereitgestellten Basis-Kennlinie.

Weiter vorzugsweise ist die Drehbeweglichkeit des Steuerrades frei von einem Endanschlag. Somit können Drehbewegungen und Bewegungsstrecken des Steuerrades unabhängig von einer minimalen, maximalen oder aktuellen Höhenposition des Krafthebers definiert werden. Mittels einer Drehbewegung des Steuerrades kann eine definierte Veränderung der ausgewählten Soll-Höhenposition des Krafthebers unabhängig von der aktuellen Drehposition des Steuerrades und unabhängig von der aktuellen Höhenposition des Krafthebers realisiert werden.

Der Kraftheber ist insbesondere als ein Dreipunkt-Kraftheber aufgebaut. Vorteilhaft ist der Kraftheber als ein Heck-Kraftheber ausgebildet, welcher im Heckbereich des Nutzfahrzeugs gelagert für eine effiziente Bodenbearbeitung eingesetzt werden kann.

Vorzugsweise handelt es sich bei dem Nutzfahrzeug um ein landwirtschaftliches Nutzfahrzeug, insbesondere Schlepper bzw. Traktor, welches mit einem Kraftheber und einem Anbaugerät zur Bodenbearbeitung (z.B. Feld, Acker, Wiese) kombiniert wird. Die Bodenbearbeitung beinhaltet beispielsweise ein Umpflügen des Bodens oder eine Bodenvorbereitung für ein tiefengenaues Einpflanzen von Saatgut oder Pflanzen.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht eines erfindungsgemäßen Nutzfahrzeugs mit einem daran gelagerten Kraftheber, und
- Fig. 2: ein Diagramm mit einer vorbestimmten Basis-Kennlinie für das erfindungsgemäße Verfahren, und
- Fig. 3: eine blockschaltbildartige Darstellung mit einer Steuereinheit zur Ansteuerung des Krafthebers, und
- Fig. 4: ein Diagramm mit einer ausgewählten Soll-Höhenposition des Krafthebers und einer festgelegten Soll-Zugkraft, und
- Fig. 5: das Diagramm gemäß Fig. 4 mit einer Veränderung der ausgewählten Soll-Höhenposition des Krafthebers, und
- Fig. 6: das Diagramm gemäß Fig. 4 mit einer weiteren Veränderung der ausgewählten Soll-Höhenposition, und
- Fig. 7: das Diagramm gemäß Fig. 4 mit einer Rückgängigmachung der in Fig. 5 und Fig. 6 veränderten ausgewählten Soll-Höhenposition, und
- Fig. 8: das Diagramm gemäß Fig. 4 mit unterschiedlich einstellbaren Steigungen einer Regelungs-Kennlinie.

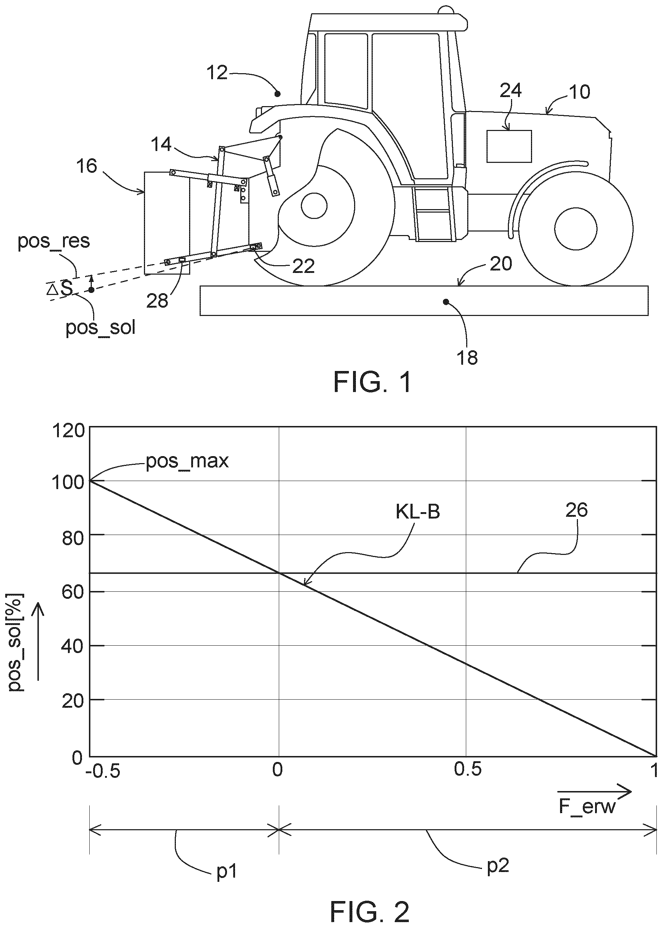

Fig. 1 zeigt ein landwirtschaftliches Nutzfahrzeug 10 in Form eines Traktors bzw. Schleppers mit einem an dessen Heckbereich 12 gelagerten Kraftheber 14 bzw. Heck-Kraftheber. Der Kraftheber 14 ist mit einem hier lediglich schematisch dargestellten Anbaugerät 16 zur Bodenbearbeitung (z.B. Pflug, Egge) gekoppelt. Die Bodenbearbeitung beinhaltet beispielsweise die Herstellung einer Furche in das Erdreich 18 eines landwirtschaftliches Feldes 20 mit einer gleichmäßigen Furchentiefe für das Einpflanzen von Saatgut oder Pflanzen.

Am Kraftheber 14 ist ein Kraftsensor 22 angeordnet, welcher eine am Kraftheber 14 aktuell angreifende Ist-Zugkraft F_sen erfasst. Die Ist-Zugkraft F_sen repräsentiert einen mechanischen Widerstand des Erdreichs 18 gegen das Anbaugerät 16 bzw. den Kraftheber 14. Die Signale des Kraftsensors 22 werden einer Steuereinheit 24 des Nutzfahrzeugs 10 zugeführt, welche den Kraftheber 14, insbesondere einen Aktuator (z.B. Hubzylinder) des Krafthebers 14 in Abhängigkeit von den Signalen des Kraftsensors 22 und weiteren noch zu beschreibenden Signalen ansteuert. Somit kann die jeweilige Höhenposition pos des Krafthebers 14 durch die Steuereinheit 24 ermittelt und eingestellt werden.

Fig. 2 zeigt eine Basis-Kennlinie KL-B, welche zur Durchführung des erfindungsgemäßen Verfahrens bereitgestellt wird und einen Zusammenhang zwischen einer von einer Arbeitsperson auswählbaren Soll-Höhenposition pos_sol des Krafthebers 14 und einer am Kraftheber 14 erwarteten Zugkraft F_erw repräsentiert. Insbesondere ist die Basis-Kennlinie KL-B in der Steuereinheit 24 gespeichert. Im vorliegenden Ausführungsbeispiel der Basis-Kennlinie KL-B sind die Werte der Soll-Höhenpositionen pos_sol nicht als Absolutwerte sondern prozentual angegeben. Jedem Wert der Soll-Höhenposition pos_sol ist ein vorbestimmter Wert der erwarteten Zugkraft F_erw zugeordnet. Daraus ergibt sich die vorbestimmte Basis-Kennlinie KL-B, welche in Fig. 2 einen linearen Verlauf hat und in alternativen Ausführungsformen zumindest abschnittsweise auch einen nichtlinearen Verlauf haben kann. Die erwartete Zugkraft F_erw ist hier ebenfalls nicht als Absolutwert sondern als Verhältnis zu einer erwarteten maximalen Zugkraft (F_erw = 1) angegeben.

Gemäß der Basis-Kennlinie KL-B wird davon ausgegangen, dass oberhalb einer Höhenposition von etwa 66% der maximalen Höhenposition pos_max des Krafthebers 14 kein Eingriff des Anbaugerätes 16 in das Erdreich 18 vorhanden ist und dementsprechend keine positive Zugkraft am Kraftheber 14 ermittelt wird. Erst bei niedrigeren Höhenpositionen des Krafthebers 14 als der vorgenannten 66% der maximalen Höhenposition pos_max wird eine positive Zugkraft F_erw erwartet, d.h. bei solchen Höhenpositionen des Krafthebers 14 wird ein Eingriff des Anbaugerätes 16 in das Erdreich 18 des Feldes 20 angenommen. Dieser Zusammenhang ist auch anhand der horizontalen Feldlinie 26 als eine virtuelle Oberfläche des Feldes 20 angedeutet.

Mittels eines - insbesondere am Kraftheber 14 angeordneten - Positionssensors 28 kann eine Höhenposition pos des Krafthebers 14 ermittelt und eingestellt werden, z.B. die von der Arbeitsperson ausgewählte Soll-Höhenposition pos_sol oder eine resultierende Höhenposition pos_res.

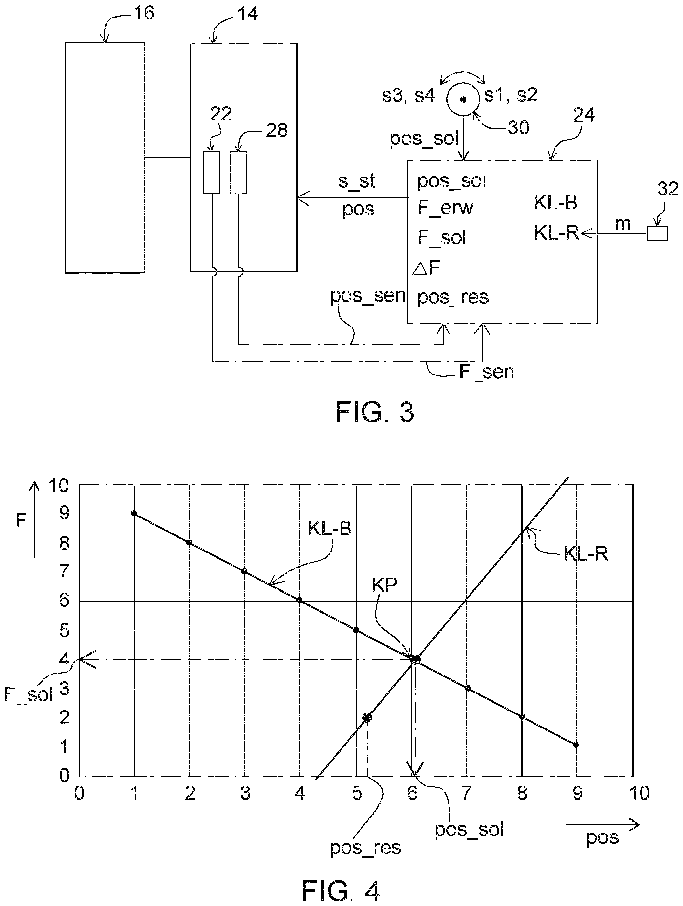

In einer Phase p1 der Basis-Kennlinie KL-B wird eine von der Arbeitsperson ausgewählte Soll-Höhenposition pos_sol des Krafthebers 14 mittels der Steuereinheit 24 im allgemeinen ohne eine Korrektur der ausgewählten Soll-Höhenposition pos_sol eingestellt. In einer Phase p2 der Basis-Kennlinie KL-B hingegen, d.h. bei einem Eingriff des Anbaugerätes 16 in das Erdreich 18, ist eine verfahrensgemäße Regelung der Höhenposition des Krafthebers 14 aktiviert, mit der durch die Steuereinheit 24 eine von der ausgewählten Soll-Höhenposition pos_sol abweichende resultierende Höhenposition pos_res ermittelbar und einstellbar ist. Hierbei ist die Basis-Kennlinie KL-B mit einer anhand von Fig. 4 bis Fig. 8 noch zu erläuternden Regelungs-Kennlinie KL-R kombiniert bzw. überlagert.

Beispielhaft für die technische Wirkung der Höhenregelung in der Phase p2 ist in Fig. 1 angedeutet, dass für die von der Arbeitsperson ausgewählte Soll-Höhenposition pos_sol des Krafthebers 14 durch die Steuereinheit 24 eine resultierende Höhenposition pos_res ermittelt und eingestellt wird. Ein Höhenversatz Δs zwischen der ausgewählten Soll-Höhenposition pos_sol und der resultierenden Höhenposition pos_res berücksichtigt eine Kraftabweichung ΔF zwischen einer festgelegten Soll-Zugkraft F_sol und der mittels des Kraftsensors 22 ermittelten Ist-Zugkraft F_sen.

Sobald der Benutzer die Soll-Höhenposition pos_sol ausgewählt hat, ist anhand der Basis-Kennlinie KL-B die dazugehörige erwartete Zugkraft F_erw bestimmbar, welche als die Soll-Zugkraft F_sol festgelegt wird. Wie bereits erwähnt, wird die resultierende Höhenposition pos_res in Abhängigkeit von der bereitgestellten Regelungs-Kennlinie KL-R ermittelt. Letztere repräsentiert eine Abhängigkeit zwischen der resultierenden Höhenposition pos_res und der Kraftabweichung ΔF, welche sich aus dem Unterschied zwischen der festgelegten Soll-Zugkraft F_sol und der sensorisch ermittelten Ist-Zugkraft F_sen ergibt.

Fig. 3 zeigt die Steuereinheit 24 mit verschiedenen Eingangs- und Ausgangssignalen, in deren Abhängigkeit der Kraftheber 14, insbesondere ein Aktuator (z.B. hydraulischer Hubzylinder), zur Einstellung seiner Höhenposition pos angesteuert wird. Die einzustellende Höhenposition pos entspricht beispielsweise der ausgewählten Soll-Höhenposition pos_sol oder der resultierenden Höhenposition pos_res. Als Eingangssignale sind u.a. die Signale bzw.

Daten des Kraftsensors 22 und des Positionssensors 28 im Bereich des Krafthebers 14 wirksam. Mittels eines Bedienelements 30 in Form eines drehbeweglichen Steuerrades kann ein Benutzer bzw. die Arbeitsperson unterschiedliche Soll-Höhenpositionen pos_sol an die Steuereinheit vorgeben.

Das Bedienelement 30 ist in zwei Drehrichtungen beweglich, so dass mittels Vorwärts- und Rückwärtsdrehungen unterschiedliche Höhenpositionen pos vorgegeben und in Abhängigkeit von den Kennlinien KL-B, KL-R eingestellt werden können. Dabei ist das Bedienelement 30 vorteilhaft frei von einem Endanschlag. Unabhängig von der aktuellen Höhenposition pos kann eine definierte Vorwärts- oder Rückwärtsdrehung (z.B. gleichmäßige Drehschritte) des Bedienelements 30 ausgeführt werden, um eine Änderung der Höhenposition pos zu bewirken. Dabei entsprechen Vorwärtsdrehungen entweder immer einer gewünschten höheren Höhenposition pos oder immer einer gewünschten niedrigeren Höhenposition pos. Für Rückwärtsdrehungen gilt dann der umgekehrte Richtungszusammenhang.

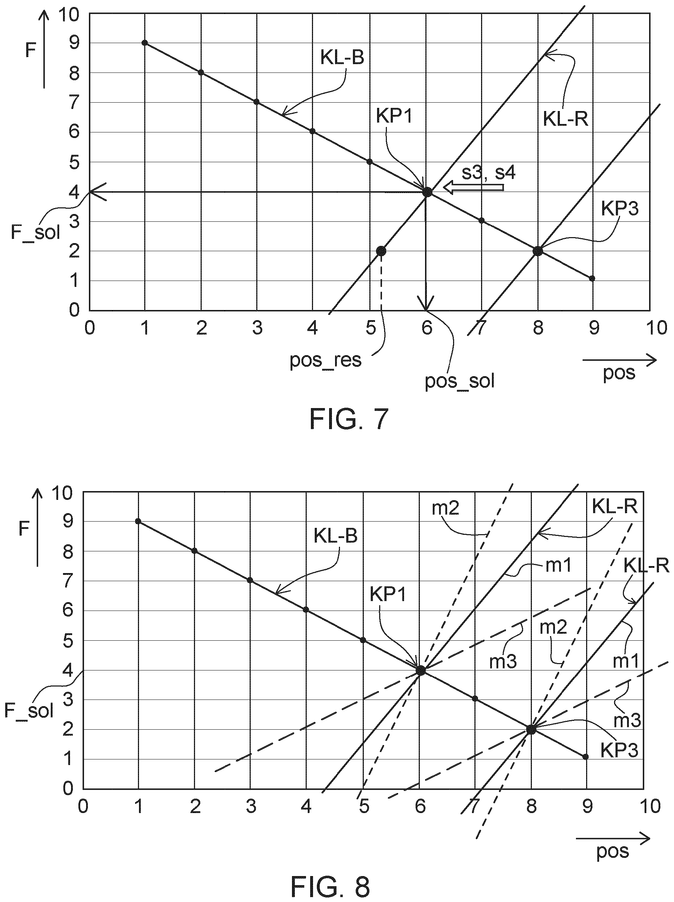

In der Steuereinheit 24 sind die Basis-Kennlinie KL-B und die Regelungs-Kennlinie KL-R gespeichert. Eine mathematische Steigung m der Regelungs-Kennlinie KL-R kann mittels eines Reglers 32 durch den Benutzer bzw. die Arbeitsperson verändert werden, um das Arbeitsergebnis in gewünschter Weise zu beeinflussen, wie auch anhand von Fig. 8 erläutert. Bei einer vom Benutzer bzw. der Arbeitsperson ausgewählten oder festgelegten Soll-Höhenposition pos_sol kann die Steuereinheit 24 die Kraftabweichung ΔF zwischen der Soll-Zugkraft F_sol und der Ist-Zugkraft F_sen ermitteln und eine davon abhängige resultierende Höhenposition pos_res berechnen.

Ganz allgemein generiert die Steuereinheit 24 Steuersignale s_st als Ausgangssignale, um den Kraftheber 14 für dessen Einstellung einer ermittelten Höhenposition pos anzusteuern.

Anhand von Fig. 4 bis Fig. 8 wird die Regelung der Höhenposition pos bei der Bodenbearbeitung beispielhaft beschrieben. Die in diesen Figuren dargestellten Diagramme enthalten verschiedene Höhenpositionen pos und verschiedene Zugkräfte F des Krafthebers 14 als Relativwerte.

Die Regelungs-Kennlinie KL-R repräsentiert grundsätzlich eine Abhängigkeit zwischen der resultierenden Höhenposition pos_res und der festgestellten Kraftabweichung ΔF und optional auch weiteren Kriterien. Die Regelungswirkung der Regelungs-Kennlinie KL-R ist vorzugsweise derart, dass die resultierende Höhenposition pos_res niedriger eingestellt wird als die ausgewählte Soll-Höhenposition pos_sol, wenn die Ist-Zugkraft F_sen kleiner ist als die festgelegte Soll-Zugkraft F_sol. Bei diesem Zusammenhang wird außerdem die resultierende Höhenposition pos_res höher eingestellt als die ausgewählte Soll-Höhenposition pos_sol, wenn die Ist-Zugkraft F_sen größer ist als die festgelegte Soll-Zugkraft F_sol.

Für die Ermittlung der resultierenden Höhenposition pos_res ist die Regelungs-Kennlinie KL-R der Basis-Kennlinie überlagert. Die Überlagerung ist derart, dass die Regelungs-Kennlinie KL-R die Basis-Kennlinie KL-B in einem Kennlinienpunkt KP schneidet, welcher auf der Basis-Kennlinie KL-B der ausgewählten Soll-Höhenposition pos_sol und der festgelegten Soll-Zugkraft F_sol entspricht (Fig. 4). Der Kennlinienpunkt KP ergibt sich vorzugsweise dadurch, dass der Benutzer bzw. die Arbeitsperson während der Bodenbearbeitung das aktuelle Arbeitsergebnis optisch prüft und die geeignet erscheinende Soll-Höhenposition pos_sol auswählt, beispielsweise mittels eines elektronischen Bestätigungssignals an die Steuereinheit 24. Durch Auswählen der Soll-Höhenposition pos_sol ist über die bereitgestellte Basis-Kennlinie KL-B automatisch die Soll-Zugkraft F_sol und folglich auch der Kennlinienpunkt KP für die Anwendung der Regelungs-Kennlinie KL-R festgelegt.

In Abhängigkeit von der festgestellten Kraftabweichung ΔF zwischen der Soll-Zugkraft F_sol und der sensorisch ermittelten Ist-Zugkraft F_sen und ggf. in Abhängigkeit von weiteren Kriterien wird anhand der Regelungs-Kennlinie KL-R die resultierende Höhenposition pos_res ermittelt. Die Steuereinheit 24 steuert den Kraftheber 14 entsprechend an, um die ermittelte resultierende Höhenposition pos_res einzustellen.

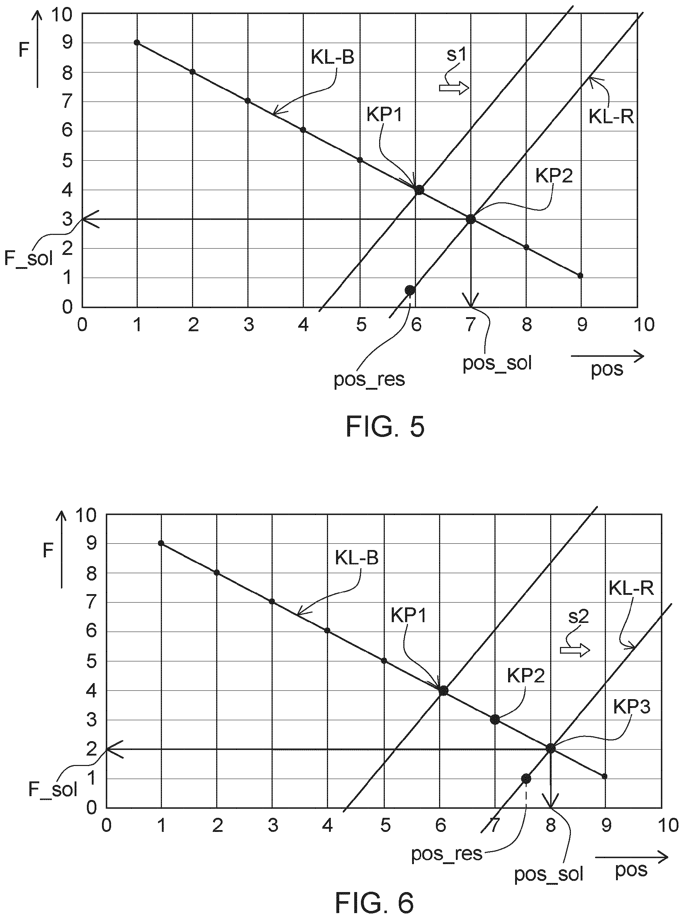

In Fig. 5 wird die gemäß Fig. 4 ausgewählte Soll-Höhenposition pos_sol um einen rotatorischen Vorwärtsschritt s1 des Bedienelements 30 verändert. Hierdurch verändert sich die Position des Kennlinienpunktes KP entlang der Basis-Kennlinie KL-B. Mit anderen Worten wird die Regelungs-Kennlinie KL-R dann nicht mehr in dem ursprünglichen Kennlinienpunkt KP1 gemäß Fig. 4, sondern im veränderten Kennlinienpunkt KP2 angewendet. Entsprechend wird durch den neuen Kennlinienpunkt KP2 in Fig. 5 die ausgewählte Soll-Höhenposition pos_sol verändert und eine veränderte Soll-Zugkraft F_sol festgelegt. Erneut wird in Abhängigkeit von der aktuell festgestellten Kraftabweichung ΔF zwischen der Soll-Zugkraft F_sol und der sensorisch ermittelten Ist-Zugkraft F_sen und ggf. in Abhängigkeit von weiteren Kriterien anhand der Regelungs-Kennlinie KL-R eine veränderte resultierende Höhenposition pos_res ermittelt.

Fig. 6 zeigt eine gegenüber Fig. 5 um einen weiteren Vorwärtsschritt s2 veränderte ausgewählte Soll-Höhenposition pos_sol. Abhängig von der aktuell ermittelten Kraftabweichung ΔF und ggf. abhängig von weiteren Kriterien wird eine weiter veränderte resultierende Höhenposition pos_res ermittelt und mittels der Steuereinheit 24 eingestellt.

Während die Vorwärtsschritte s1, s2 eine höhere resultierende Höhenposition pos_res bewirken, kann durch eine Betätigung des Bedienelements 30 in umgekehrter Drehrichtung eine niedrigere resultierende Höhenposition pos_res eingestellt werden.

Fig. 7 zeigt eine Rückgängigmachung der veränderten resultierenden Höhenposition pos_res gemäß Fig. 6. Hierbei wird mit zwei Rückwärtsschritten s3, s4 wieder die Soll-Höhenposition pos_sol gemäß Fig. 4 ausgewählt und - bei ähnlich bis konstant gebliebenen Bodenverhältnissen - auch die resultierende Höhenposition pos_res vor der Veränderung gemäß Fig. 5 und Fig. 6 ermittelt.

Fig. 8 zeigt nochmals die Basis-Kennlinie KL-B und die damit überlagerte Regelungs-Kennlinie KL-R, welche in Abhängigkeit von unterschiedlich ausgewählten Soll-Positionen pos_sol bzw. unterschiedlichen Kennlinienpunkten KP wirksam sein kann, wie bereits beispielhaft anhand der Kennlinienpunkte KP1, KP2, KP3 in Fig. 4 bis Fig. 7 erläutert. In Fig. 8 ist angedeutet, dass die Steigung m der Regelungs-Kennlinie KL-R mittels des Reglers 32 durch den Benutzer bzw. die Arbeitsperson veränderbar ist, um das gewünschte Arbeitsergebnis auf dem Feld 20 zu beeinflussen bzw. zu optimieren. Beispielsweise kann eine ursprünglich eingestellte Steigung m1 durch eine Steigung m2 oder m3 oder durch einen anderen Steigungswert geändert werden.

## Patentansprüche

1. Verfahren zur Einstellung einer Höhenposition (pos) eines an einem Nutzfahrzeug (10) gelagerten und mit einem Anbaugerät (16) zur Bodenbearbeitung gekoppelten Krafthebers (14), wobei
- eine Basis-Kennlinie (KL-B) bereitgestellt wird, welche einen Zusammenhang zwischen einer Soll-Höhenposition (pos_sol) des Krafthebers (14) und einer am Kraftheber (14) erwarteten Zugkraft (F_erw) repräsentiert,
- für eine ausgewählte Soll-Höhenposition (pos_sol) die mittels der Basis-Kennlinie (KL-B) erwartete Zugkraft (F_erw) als eine Soll-Zugkraft (F_sol) festgelegt wird, und
- in Abhängigkeit von der Soll-Zugkraft (F_sol) und einer am Kraftheber (14) erfassten Ist-Zugkraft (F_sen) eine resultierende Höhenposition (pos_res) des Krafthebers (14) ermittelt und eingestellt wird.

2. Verfahren nach Anspruch 1, **dadurch gekennzeichnet, dass** die resultierende Höhenposition (pos_res) in Abhängigkeit von einer bereitgestellten Regelungs-Kennlinie (KL-R) ermittelt wird, welche einen Zusammenhang zwischen der resultierenden Höhenposition (pos_res) und einer Abweichung (ΔF) der Soll-Zugkraft (F_sol) von der Ist-Zugkraft (F_sen) repräsentiert.

3. Verfahren nach Anspruch 2, **dadurch gekennzeichnet, dass** die Regelungs-Kennlinie (KL-R) die Basis-Kennlinie (KL-B) in einem Kennlinienpunkt (KP, KP1, KP2, KP3) schneidet, welcher auf der Basis-Kennlinie (KL-B) der ausgewählten Soll-Höhenposition (pos_sol) und der festgelegten Soll-Zugkraft (F_sol) entspricht.

4. Verfahren nach Anspruch 2 oder 3, **gekennzeichnet durch** einen Zusammenhang der Regelungs-Kennlinie (KL-R) derart, dass die resultierende Höhenposition (pos_res)
- niedriger eingestellt wird als die ausgewählte Soll-Höhenposition (pos_sol), wenn die Ist-Zugkraft (F_sen) kleiner ist als die Soll-Zugkraft (F_sol), und
- höher eingestellt wird als die ausgewählte Soll-Höhenposition (pos_sol), wenn die Ist-Zugkraft (F_sen) größer ist als die Soll-Zugkraft (F_sol).

5. Verfahren nach einem der Ansprüche 2 bis 4, **dadurch gekennzeichnet, dass** eine Steigung (m) der Regelungs-Kennlinie (KL-R) veränderbar ist.

6. Verfahren nach einem der vorhergehenden Ansprüche, **dadurch gekennzeichnet, dass** die ausgewählte Soll-Höhenposition (pos_sol) mittels eines Bedienelements (30) veränderbar ist.

7. Verfahren nach Anspruch 6, **dadurch gekennzeichnet, dass** die ausgewählte Soll-Höhenposition (pos_sol) schrittweise durch mindestens einen Vorwärtsschritt (s1, s2) des Bedienelements (30) veränderbar ist.

8. Verfahren nach Anspruch 7, **dadurch gekennzeichnet, dass** ausgehend von einer durch mindestens einen Vorwärtsschritt (s1, s2) eingestellten veränderten resultierenden Höhenposition (pos_res) wieder die resultierende Höhenposition (pos_res) vor der Veränderung einstellbar ist durch eine Anzahl von Rückwärtsschritten (s3, s4) des Bedienelements, welche der Anzahl der Vorwärtsschritte (s1, s2) entspricht.

9. Nutzfahrzeug (10) mit einem daran gelagerten Kraftheber (14), welcher mit einem Anbaugerät (16) zur Bodenbearbeitung gekoppelt ist, mit einem Kraftsensor (22) zur Erfassung einer Ist-Zugkraft (F_sen) am Kraftheber (14) und mit einer Steuereinheit (24) zur Einstellung einer Höhenposition (pos) des Krafthebers (14) derart, dass
- eine Basis-Kennlinie (KL-B) bereitgestellt ist, welche einen Zusammenhang zwischen einer Soll-Höhenposition (pos_sol) des Krafthebers (14) und einer am Kraftheber (14) erwarteten Zugkraft (F_erw) repräsentiert,
- für eine ausgewählte Soll-Höhenposition (pos_sol) die mittels der Basis-Kennlinie (KL-B) erwartete Zugkraft (F_erw) als eine Soll-Zugkraft (F_sol) festlegbar ist, und
- in Abhängigkeit von der Soll-Zugkraft (F_sol) und der Ist-Zugkraft (F_sen) eine resultierende Höhenposition (pos_res) des Krafthebers (14) ermittelbar und einstellbar ist.

10. Nutzfahrzeug nach Anspruch 9, **gekennzeichnet durch** ein Bedienelement (30) zur Veränderung der ausgewählten Soll-Höhenposition (pos_sol).

11. Nutzfahrzeug nach Anspruch 10, **dadurch gekennzeichnet, dass** das Bedienelement (30) als ein drehbewegliches Steuerrad ausgebildet ist.

12. Nutzfahrzeug nach Anspruch 11, **dadurch gekennzeichnet, dass** die Drehbeweglichkeit des Steuerrades (30) frei von einem Endanschlag ist.

13. Nutzfahrzeug nach einem der Ansprüche 9 bis 12, **dadurch gekennzeichnet, dass** der Kraftheber (14) als ein Heck-Kraftheber ausgebildet ist.

14. Nutzfahrzeug nach einem der Ansprüche 9 bis 13, **gekennzeichnet durch** ein landwirtschaftliches Nutzfahrzeug (10).
